# EUROPÄISCHE PATENTSCHRIFT

(11) **EP 3 097 316 B1**
(45) Veröffentlichungstag und Bekanntmachung des Hinweises auf die Patenterteilung: **05.06.2019**
(21) Anmeldenummer: 15704203.7
(22) Anmeldetag: 22.01.2015
(51) Int. Cl.: F16C 17/03, F16C 37/00

(54) **KIPPSEGMENT FÜR EINE WELLENLAGERVORRICHTUNG UND WELLENLAGERVORRICHTUNG**
TILTING SEGMENT FOR A SHAFT BEARING DEVICE, AND SHAFT BEARING DEVICE
PATIN OSCILLANT POUR DISPOSITIF FORMANT PALIER D'ARBRE ET DISPOSITIF FORMANT PALIER D'ARBRE

(30) Priorität: 24.01.2014 DE 102014000775
(43) Veröffentlichungstag der Anmeldung: 30.11.2016
(73) Patentinhaber: MAN Energy Solutions SE, 86153 Augsburg (DE)
(72) Erfinder: HAVLIK, Nico, 13057 Berlin (DE); LUTZ, Michael, 38179 Rothemühle (DE); ROCKSTROH, Uwe, 87527 Sonthofen (DE); WACKER, Christian, 13585 Berlin (DE); KLAUSMANN, Jan, 10405 Berlin (DE)
(86) Internationale Anmeldenummer: PCT/EP2015/000123
(87) Internationale Veröffentlichungsnummer: WO 2015/110267

(56) Entgegenhaltungen:
- EP-A1- 0 064 598
- EP-A1- 2 679 839
- JP-A- H09 144 750
- JP-A- 2001 200 847
- JP-A- 2008 151 239
- US-A- 3 891 281
- US-A1- 2002 110 295

## Beschreibung

Die Erfindung betrifft ein Kippsegment für eine Wellenlagervorrichtung nach dem Oberbergriff des Anspruchs 1. Des Weiteren betrifft die Erfindung eine Wellenlagervorrichtung.

Aus der US 6,361,215 B1 ist eine Wellenlagervorrichtung zur Gleitlagerung einer rotierenden Welle bekannt, die einen Lagergrundkörper und mehrere am Lagergrundkörper aufgenommene, in Umfangsrichtung hintereinander positionierte Kippsegmente umfasst. Jedes der Kippsegmente verfügt über eine Gleitlagerfläche, die einerseits von einer sich in Axialrichtung erstreckenden Segmenteintrittskante sowie einer sich ebenfalls in Axialrichtung erstreckenden Segmentaustrittskante und andererseits von sich in Umfangsrichtung zwischen der Segmenteintrittskante und der Segmentaustrittskante erstreckenden Seitenrändern begrenzt ist. Aus der US 6,361,215 B1 ist es ferner bekannt, dass an einer solchen Wellenlagervorrichtung eine sogenannte gelenkte Schmierung oder eine sogenannte geflutete Schmierung zum Einsatz kommen kann, wobei die sogenannte geflutete Schmierung über den Vorteil einer besseren Schwingungsdämpfung und die gelenkte Schmierung über den Vorteil eines geringeren Ölverbrauchs und damit einer geringeren Verlustleitung verfügt. Um eine Wellenlagervorrichtung mit geringerer Verlustleitung und mit gleichzeitig reduziertem Schwingungsverhalten bereitzustellen, ist nach der US 6,361,215 B1 am Anfang der Gleiterfläche des Kippsegments, benachbart zur Segmenteintrittskante, eine sich in Axialrichtung erstreckende Nut, eine sogenannte Leading Edge Groove, eingebracht, über die das Kippsegment mit Öl versorgt wird. Ebenfalls sind in die Gleitlagerfläche sich in Umfangsrichtung erstreckende Nuten eingebracht, die benachbart zu den Seitenrändern verlaufen und sich bis in den Bereich der Segmentaustrittskante des Kippsegments erstrecken.

Diese sich in Umfangsrichtung erstreckende Nuten der aus der US 6,361,215 B1 bekannten Kippsegmente, reduzieren den seitlichen Abfluss von Öl vom jeweiligen Kippsegment. Mit diesem reduzierten Ölseitenfluß wird eine definierte Ölmenge in den divergenten Schmierspalt am Segmentende gefördert und sorgt dort für eine verbesserte Schwingungsdämpfung sogenannter synchroner und sogenannter subsynchroner möglicher Schwingungen.

Aus der US 6,485,182 B1 ist eine weitere Wellenlagervorrichtung mit Kippsegmenten bekannt, wobei nach diesem Stand der Technik die Kippsegmente über einen zwischen benachbarten Kippsegmenten ausgebildeten Spalt mit Öl versorgt werden.

Bei aus dem Stand der Technik bekannten Wellenlagervorrichtungen mit Kippsegmenten besteht das Problem, dass insbesondere die im Betrieb relativ gering belasteten Kippsegmente zu einem sogenannten Segmentflattern neigen.

Das sogenannte Segmentflattern beschreibt im Lager selbst induzierte subsynchrone Schwingungen. Diese entstehen durch das ständige Schwingen der unbelasteten Kippsegmente zwischen zwei verschiedenen Gleichgewichtspunkten. Das Kippsegment kann hierbei keine stabile Lage einnehmen und ist daher instabil. Das sogenannte Segmentflattern kann zum Beispiel infolge von Mangelschmierung auftreten. Dies ist dann der Fall, wenn der Schmierspalt nicht vollständig mit Schmierstoff gefüllt werden kann. Dieser Fall kann auftreten, wenn die Exzentrizität zwischen Wellen- und Lagermittelpunkt sehr groß wird. Dabei können die Schmierspaltweiten zwischen dem unbelasteten und belasteten Kippsegment um ein vielfaches voneinander abweichen, sodass die Menge des eingespeisten Schmierstoffes den stark vergrößerten Schmierspalt des unbelasteten Kippsegmentes nicht mehr vollständig füllen kann.

Im Extremfall führt das Segmentflattern zu einer Festkörperberührung der Segmentgleitfläche mit der Wellenoberfläche und so einer Beschädigung oder gar Zerstörung des Segmentes.

Eine Möglichkeit zur Reduzierung des Segmentflatterns besteht darin, das Lager mit einer gefluteten Schmierung auszustatten, sodass das gesamte Lager mit Schmierstoff gefüllt ist. Hierbei wird üblicherweise konstruktiv eine seitliche Abdichtung an den axialen Lagerenden des Lagergehäuses eingesetzt, welche den Ölseitenfluss des über dem Kippsegment aufgewärmten Schmieröls aus dem Lagergehäuse heraus einschränkt. Hierdurch ist die Schmierfilmtemperatur wegen des eingeschränkten Abflusses des warmen Schmieröls aus dem Gleitlager deutlich höher und des Weiteren aufgrund der vergrößerten Flüssigkeitsreibung auch die Verlustleistung. Solche Maschinenanpassungen zum Unterdrücken bzw. zum Reduzieren des Segmentflatterns sind sehr kostenaufwendig.

Bislang sind keine Lösungen bekannt, mit Hilfe derer ein sogenanntes Segmentflattern mittels einfacher Maßnahmen sicher und zuverlässig vermieden werden kann.

Aus der US 2002/0110295 A1, aus der EP 2 679 839 A1, aus der JP H09 144750 A, aus der EP 0 064 598 A1, aus der US 3 891 281 A und aus der JP 2008 151239 A ist weiterer Stand der Technik bekannt.

Hiervon ausgehend liegt der vorliegenden Erfindung die Aufgabe zugrunde, ein neuartiges Kippsegment für eine Wellenlagervorrichtung und eine neuartige Wellenlagervorrichtung zu schaffen.

Diese Aufgabe wird durch ein Kippsegment nach Anspruch 1 gelöst.

Durch die Erfindung ist es möglich, das sogenannte Segmentflattern, insbesondere an relativ gering belasteten Kippsegmenten einer Wellenlagervorrichtung, sicher und zuverlässig zu vermeiden.

Am Übergang von der sich in Axialrichtung erstreckenden Nut entsteht in Höhenrichtung vom Grund der sich in Axialrichtung erstreckenden Nut zur Gleitlagerfläche, welche sich bis zur Segmentaustrittskante erstreckt, eine Verengung der Spalthöhe zwischen Kippsegment und der durch diese Wellenlagervorrichtung gelagerten Welle. Aufgrund dieser Spaltverengung, sowie aufgrund eines Geschwindigkeitsunterschiedes zwischen Welle und Lager und weil der Schmierstoff an der Wellenoberfläche haftet, resultiert der Aufbau eines hydrodynamischen Druckes.

Da die sich axial erstreckende Nut in Umfangsrichtung näher an der Segmentaustrittskannte als an der Segmenteintrittskante liegt, und somit auch die Spaltverengung näher an der Segmentaustrittskante als an der Segmenteintrittskante, findet daher der Aufbau eines zusätzlichen hydrodynamischen Druckes im divergenten Bereich zwischen Welle und Kippsegment statt. Die Erzeugung des hydrodynamischen Druckes im divergenten Bereich führt dazu, dass dieser divergente Bereich zwischen Kippsegment und Welle mit Schmierstoff gefüllt wird. Eine vollständige Befüllung des divergenten Bereichs ist ansonsten nur mit gefluteten Lagern, die den seitlichen Schmierstoffablauf verhindern, möglich. Die Befüllung des divergenten Spaltes verhindert die Bewegung des Kippsegmentes in Richtung des nun gefüllten divergenten Spaltes, wodurch so dem Segmentflattern effektiv entgegengewirkt wird.

Der aufgebaute hydrodynamische Druck bewirkt eine Spaltfüllung zwischen Kippsegment und Welle mit Schmierstoff im divergenten Spaltbereich zwischen eben diesem Kippsegment und dieser Welle. Hierdurch findet auch ein Wärmeaustausch zwischen den unterschiedlich warmen Schichten des Schmierstoffes zwischen Welle und Kippsegment statt.

Hierbei wird der Wärmeübergang im Bereich der Wellenoberfläche durch die teilweise Transition in das turbulente Stömungsregime mit entsprechender Erhöhung der Nußelt Zahl (*Nu*) wesentlich verbessert sowie partiell auch in Umfangsrichtung der Welle gerichtete Taylo*r*wirbel erzeugt, die ebenfalls zu einem verbesserten Wärmeübergang führen und damit die Wellentemperatur und das Temperaturniveau des Lagers insgesamt absenken.

Eine Längsmittelachse der sich in Axialrichtung erstreckenden Nut ist in einem Abschnitt der Gleitlagerfläche positioniert, der in Richtung der an der Segmenteintrittskante mit 0% beginnenden und der an der Segmentaustrittskante mit 100% endenden Umfangserstreckung U1 der Gleitlagerfläche zwischen 60% und 90%, bevorzugt zwischen 60% und 80%, besonders bevorzugt zwischen 70% und 80%, der Umfangserstreckung U1 der Gleitlagerfläche liegt. Hiermit kann einem Segmentflattern besonders vorteilhaft entgegengewirkt werden.

Für das Verhältnis VU=U2/U1 zwischen der sich in Umfangsrichtung erstreckenden Nutbreite U2 der sich in Axialrichtung erstreckenden Nut und der sich zwischen der Segmenteintrittskante und der Segmentaustrittskante ersteckenden Umfangserstreckung U1 der Gleitlagerfläche gilt 0,02≤VU≤0,20, bevorzugt 0,05≤VU≤0,20, besonders bevorzugt 0,05≤VU≤0,10. Auch diese Maßnahmen erlauben es, einem Segmentflattern eines Kippsegments effektiv entgegenzuwirken.

Für das Verhältnis VL=L2/L1 zwischen der sich in Axialrichtung erstreckenden Nutlänge L2 der sich in Axialrichtung erstreckenden Nut und der sich zwischen den Seitenrändern ersteckenden Axialerstreckung L1 der Gleitlagerfläche gilt 0,5≤VL<1,0, bevorzugt 0,6≤VL<1,0, besonders bevorzugt 0,7≤VL<1,0. Diese Maßnahmen ist zur Unterdrückung eines Segmentflatterns an einem Kippsegment einer Wellenlagervorrichtung ebenso von Vorteil.

In die Gleitlagerfläche ist eine sich in Umfangsrichtung erstreckende Nut eingebracht, die sich, ausgehend von der Segmenteintrittskante, in die sich in Axialrichtung erstreckenden Nut hinein erstreckt. Durch die sich in Umfangsrichtung erstreckende Nut kann ausgehend von der Segmenteintrittskante in die sich in Axialrichtung erstreckende Nut Öl gefördert werden. Das in dieser sich axial erstreckenden Nut geförderte Öl erfährt dabei eine geringere Erwärmung als das von der Segmenteintrittskante in Umfangsrichtung auf der Gleitfläche geförderte Öl. Durch das zusätzliche Anstauen des Öls infolge des hydrodynamischen Drucks findet daher eine Wärmeaustausch der unterschiedlich erwärmten Ölströme im divergenten Spaltbereich statt. Dies führt ebenfalls zur Kühlung der Wellenoberfläche und zur Reduktion des Temperaturniveaus in der Wellenlagervorrichtung insgesamt. Wie bereits ausgeführt, kann durch die sich ausbildenden hydrodynamischen Druckverhältnisse nicht nur dem Segmentflattern entgegengewirkt werden, sondern es können ferner sich an der Wellenoberfläche befindliche, laminar ausgeprägte Warmölschichten aufgebrochen werden.

Im Unterscheid zur US 6,361,215 B1 dienen bei der Erfindung die Nuten nicht dem Zurückhalten von Warmöl im Gleitlager zur Füllung des divergenten Spaltes, vielmehr wird mit dem erfindungsgemäßen Kippsegment erreicht, das Warmöl aus dem Gleitlager herausfließen und das Temperaturniveau im Lager gesenkt werden kann.

Zusätzlich oder vorzugsweise alternativ zu der sich in Umfangsrichtung erstreckenden Nut kann die sich in Axialrichtung erstreckende Nut eine Anfasung aufweisen und zwar derart, dass sich in Umfangsrichtung gesehen eine Nuttiefe der in Axialrichtung erstreckenden Nut in Richtung auf die Segmentaustrittskante erhöht. Auch hierdurch können laminar ausgeprägte Warmölschichten aufgebrochen und turbulente Ölströmungen sowie in Drehrichtung der Welle verlaufende Taylorwirbel zur Verbesserung der Wärmeabfuhr von der Welle erzeugt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Ansicht einer Wellenlagervorrichtung in axialer Blickrichtung;
- Fig. 2:: eine perspektivische Ansicht eines Kippsegments für eine Wellenlagervorrichtung;
- Fig. 3:: eine perspektivische Ansicht eines ersten erfindungsgemäßen Kippsegments für eine Wellenlagervorrichtung;
- Fig. 4:: eine perspektivische Ansicht eines zweiten erfindungsgemäßen Kippsegments für eine Wellenlagervorrichtung; und
- Fig. 5:: eine perspektivische Ansicht eines weiteren, jedoch nicht erfindungsgemäßen Kippsegments für eine Wellenlagervorrichtung.

Die hier vorliegende Erfindung betrifft eine Wellenlagervorrichtung zur Gleitlagerung einer rotierenden Welle sowie ein Kippsegment für eine solche Wellenlagervorrichtung.

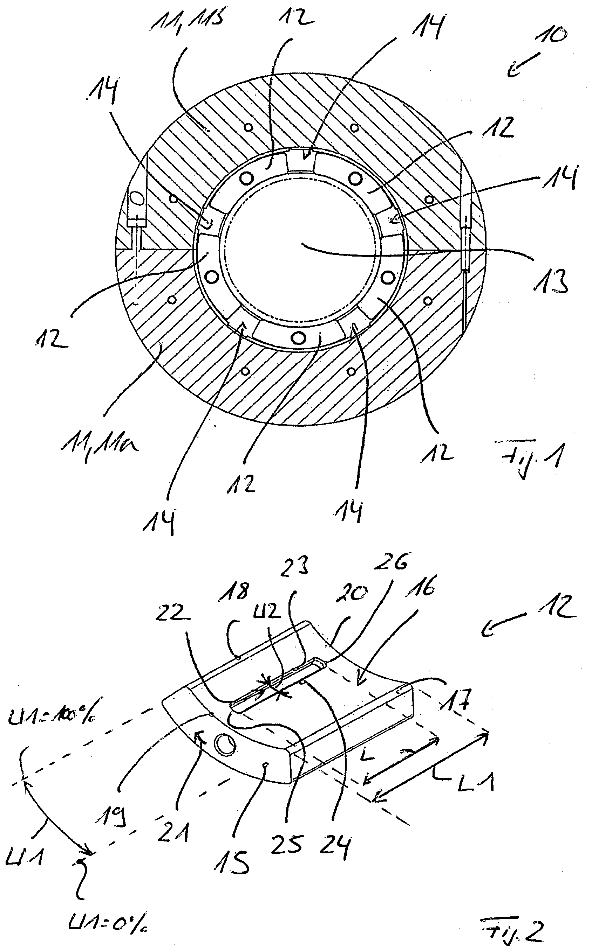

Fig. 1 zeigt stark schematisiert in axialer Blickrichtung eine Wellenlagervorrichtung 10 zur Gleitlagerung einer rotierenden Welle 13, wobei die Wellenlagervorrichtung 10 einen Lagergrundkörper 11 aus zwei Teilringen 11a, 11b aufweist, in dem in Umfangsrichtung gesehen mehrere Kippsegmente 12 hintereinander aufgenommen sind. Die Kippsegmente 12 sind in Umfangsrichtung radial außen um die zu lagernde Welle 13 herum angeordnet, wobei zwischen benachbarten Kippsegmenten 12 jeweils ein Spalt 14 für die Zuführung von Schmieröl in Richtung auf die Einströmkante, Vorderkante in Drehrichtung der Welle, des Kippsegmentes 12 sowie zur Abführung von Warmöl von der Austrittskante, Hinterkannte in Drehrichtung der Welle, des Kippsegmentes 12 ausgebildet ist.

Fig. 2 zeigt eine perspektivische Ansicht einer Ausführungsform eines Kippsegments 12 für eine solche Wellenlagervorrichtung 10.

Das Kippsegment 12 verfügt über einen Grundkörper 15, der eine Gleitlagerfläche 16 ausbildet, wobei die Gleitlagerfläche 16 von einer sich in Axialrichtung erstreckenden Segmenteintrittskante 17, einer sich ebenfalls in Axialrichtung erstreckenden Segmentaustrittskante 18 sowie von sich in Umfangsrichtung zwischen der Segmenteintrittskante 17 und der Segmentaustrittskante 18 erstreckenden Seitenrändern 19, 20 begrenzt ist.

Bei der Segmenteintrittskante 17 handelt es sich um diejenige in Axialrichtung erstreckende Kante des Grundkörpers 15 des Kippsegments 12, die in Drehrichtung der zu lagernden Welle 13 gesehen vorne positioniert ist. Die Segmentaustrittskante 18 ist in Drehrichtung der zu lagernden Welle 13 gesehen hinten positioniert. Die Drehrichtung der zu lagernden Welle ist in Fig. 2 durch einen Pfeil 21 gekennzeichnet.

Im Sinne der hier vorliegenden Erfindung ist in die Gleitlagerfläche 16 in einem näher an der Segmentaustrittskante 18 als an der Segmenteintrittskante 17 liegenden Abschnitt der Gleitlagerfläche 16 eine sich in Axialrichtung erstreckende Nut 22 eingebracht.

Das Kippsegment 12 ist im Betrieb durch Kräfte belastet, wobei derjenige Abschnitt der Gleitlagerfläche 16 des Kippsegments 12, in welchem im Betrieb die höchsten Kräfte am jeweiligen Kippsegment 12 auftreten, als Hauptbelastungszone des jeweiligen Kippsegments 12 bezeichnet wird. Die sich in Axialrichtung erstreckende Nut 22 ist dabei in Umfangsrichtung gesehen zwischen dieser Hauptbelastungszone und der Segmentaustrittskante 18 positioniert.

Im Betrieb sammelt sich in der sich in Axialrichtung erstreckenden Nut 22, die näher an der Segmentaustrittskante 18 als an der Segmenteintrittskante 17 positioniert ist, Öl, wodurch sich dann im Betrieb ein zusätzlicher hydrodynamischer Druck aufbaut, der eine Vorspannung für das jeweilige Kippsegment 12 bewirkt. Hierdurch kann das sogenannte Segmentflattern an dem jeweiligen Kippsegment 12 unterdrückt werden.

Wie bereits ausgeführt, ist die in die Gleitlagerfläche 16 eingebrachte, sich in Axialrichtung erstreckende Nut 22 näher an der Segmentaustrittskante 18 als an der Segmenteintrittskante 17 positioniert, nämlich zwischen der sogenannten Hauptbelastungszone des Kippsegments 12 und der Segmentaustrittskante 18 desselben. Eine Längsmittelachse der sich in Axialrichtung erstreckenden Nut 22 ist in einem Abschnitt der Gleitlagerfläche 16 positioniert, der in Richtung der an der Segmenteintrittskante 17 mit 0% beginnenden und der an der Segmentaustrittskante 18 mit 100% endenden Umfangserstreckung U1 der Gleitlagerfläche 16 zwischen 60% und 90%, bevorzugt zwischen 60% und 80%, besonders bevorzugt zwischen 70% und 80%, der Umfangserstreckung U1 der Gleitlagerfläche 16 liegt.

Dann, wenn die Längsmittelachse der sich in Axialrichtung erstreckenden Nut 22 und damit auch die Nut 22 in einem derart positionierten Abschnitt der Gleitlagerfläche 16 gelegen ist, kann dem Segmentflattern besonders effektiv entgegengewirkt werden.

Für das Verhältnis VU=U2/U1 zwischen der sich in Umfangsrichtung erstreckenden Nutbreite U2 der sich in Axialrichtung erstreckenden Nut 22 und der sich zwischen der Segmenteintrittskante 17 und der Segmentaustrittskante 18 erstreckenden Umfangserstreckung U1 der Gleitlagerfläche 16 des jeweiligen Kippsegments 12 gilt folgendes Verhältnis 0,02≤VU≤0,20, bevorzugt gilt das Verhältnis 0,05≤VU≤0,20, besonders bevorzugt gilt das Verhältnis 0,05≤VU≤0,10.

Eine Nut 22 mit einer derartigen Nutbreite U2 hat sich zur Unterdrückung des Segmentflatterns als besonders vorteilhaft erwiesen.

Die sich in Axialrichtung erstreckende Nut 22 ist im Ausführungsbeispiel der Fig. 2 von vier Nutwänden begrenzt, nämlich von einer sich in Axialrichtung erstreckenden, der Segmentaustrittskante 18 zugewandten, ersten Nutwand 23, einer sich ebenfalls in Axialrichtung erstreckenden, von der Segmentaustrittskante 18 abgewandten, zweiten Nutwand 24 und von zwei seitlichen Nutwänden 25. 26. die sich zwischen der ersten Nutwand 23 und der zweiten Nutwand 24 erstrecken. Der Abstand zwischen der ersten Nutwand 23 und der zweiten Nutwand 24, die sich jeweils in Axialrichtung erstrecken, bestimmt die Nutbreite U2 der Nut 22, wobei der Abstand zwischen den seitlichen Nutwänden 25, 26 eine sich in Axialrichtung erstreckende Nutlänge L2 der sich in Axialrichtung erstreckenden Nut 22 bestimmt. Für das Verhältnis VL = L2/L1 zwischen der sich in Axialrichtung erstreckenden Nutlänge L2 der sich in Axialrichtung erstreckende Nut 22 und der sich zwischen den Seitenrändern 19, 20 erstreckenden Axialerstreckung L1 der Gleitlagerfläche 16 gilt das Verhältnis 0,5≤VL<1,0, bevorzugt gilt das Verhältnis 0,6sVL<1,0, besonders bevorzugt gilt das Verhältnis 0,7≤5VL<1,0.

In der Variante der Fig. 2 ist die sich in Axialrichtung erstreckende Nut 22, die an der Gleitlagerfläche 16 des Kippsegments 12 ausgebildet ist, von den Nutwänden 23, 24, 25 und 26 ringsum begrenzt, wobei die Nut 22 in Radialrichtung gesehen eine konstante Nuttiefe aufweist.

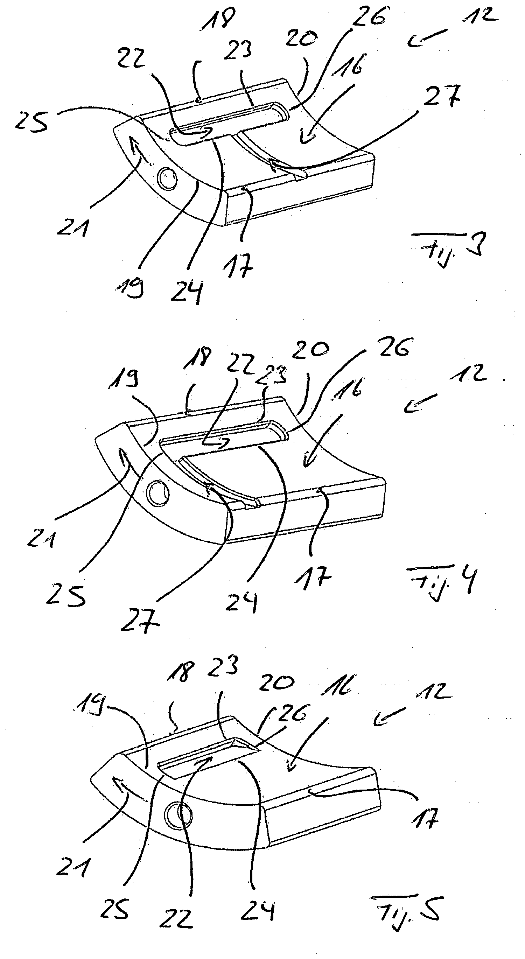

Fig. 3 zeigt eine Weiterbildung des Kippsegments 12 der Fig. 2, wobei erfindungsgemäß die Variante der Fig. 3 von der Variante der Fig. 2 dadurch unterscheidet, dass in die Gleitlagerfläche 16 des Kippsegments 12 eine weitere Nut 27 eingebracht ist, nämlich eine sich in Umfangsrichtung erstreckende Nut 27, die sich ausgehend von der Segmenteintrittskante 17 in die sich in Axialrichtung erstreckende Nut 22 hinein erstreckt. Über diese sich in Umfangsrichtung erstreckende Nut 27 kann ausgehend von der Segmenteintrittskante 17 Öl in die sich in Axialrichtung erstreckende Nut 22 gefördert werden. Hierdurch wird ein hydrodynamischer Druckaufbau verursacht, der einerseits im Betrieb eine sich an der Wellenoberfläche der Welle 13 ausbildende, laminar ausgeprägte Warmölschicht aufbrechen, und die andererseits für eine turbulente Ölströmung sowie sich in Drehrichtung der zu lagernden Welle 13 verlaufende, mögliche Taylorwirbel sorgt, wodurch insgesamt eine bessere Wärmeabfuhr von der Gleitfläche 16 und der Wellenoberfläche 13 verursacht wird.

In der Variante der Fig. 3 mündet diese sich in Umfangsrichtung erstreckende Nut 27 in der Mitte der axialen Nutlänge L2 der sich in Axialrichtung erstreckenden Nut 22. Demgegenüber zeigt Fig. 4 eine Weiterbildung der Erfindung, in welcher die sich in Umfangsrichtung erstreckende Nut 22 benachbart zu einem der Seitenränder 19, 20 der Gleitlagerfläche 16 verläuft und in einem seitlichen Abschnitt benachbart zu einer seitlichen Nutwand 25 in die sich in Axialrichtung erstreckende Nut 22 mündet.

Eine weitere Variante, (nicht Teil der Erfindung), eines Kippsegments 12 zeigt Fig. 5, wobei in Fig. 5 ausschließlich die sich in Axialrichtung erstreckende Nut 22 vorhanden ist, jedoch keine sich in Umfangsrichtung erstreckende Nut. Vielmehr ist die sich in Axialrichtung erstreckende Nut 22 durch eine Anfasung gekennzeichnet, nämlich derart, dass sich ausgehend von der Nutwand 24, die von der Segmentaustrittskante 18 abgewandt ist, die Nuttiefe der Nut 22 in Richtung auf die Nutwand 23, der der Segmentaustrittskante 18 zugewandt ist, erhöht.

Dabei erhöht sich die Nuttiefe gemäß der Abbildung der Fig. 5 vorzugsweise rampenartig linear, also stetig bzw. kontinuierlich in Richtung auf die der Segmentaustrittskante 18 zugewandte Nutwand 23.

Die Anfasung kann alternativ auch mit einem Radius ausgeführt werden.

Auch hierdurch kann die Ölzufuhr in die sich in Axialrichtung erstreckende Nut 22 unterstützt werden, um Warmölschichten, die sich im Bereich der Wellenoberfläche der zu lagernden Welle 13 ausbilden können, aufzubrechen, und um andererseits eine mögliche turbulente Ölströmungen sowie in Drehrichtung der zu lagernden Welle 13 verlaufende Taylorwirbel zu erzeugen, um letztendlich hierdurch den Wärmeübergang und damit die Wärmeabfuhr von dem Segement 12 und der gelagerten Welle 13 zu verbessern.

Es ist auch möglich, eine derartige Anfasung der sich in Axialrichtung erstreckenden Nut 22 gemäß Fig. 5 mit einer sich in Umfangsrichtung erstreckenden Nut 27 der Fig. 3 und 4 zu kombinieren.

Mit Hilfe der Erfindung kann mit einfachen Mitteln effektiv und zuverlässig einem Segmentflattern von Kippsegmenten 12 entgegengewirkt werden. Ferner kann der Wärmeübergang aus dem Schmierspalt verbessert und damit das Temperaturniveau abgesenkt werden..

Die hier vorliegende Erfindung betrifft nicht nur ein Kippsegment 12, sondern auch eine Wellenlagervorrichtung 10 mit mindestens einem solchen Kippsegment 12.

Im Betrieb werden erste Kippsegmente 12 der Wellenlagervorrichtung 10 stärker mit Kräften belastet als zweite Kippsegmente 12. Bei einer Wellenlagervorrichtung 10 für eine horizontal verlaufende Welle sind insbesondere die unteren Kippsegmente 12 stärker durch Kräfte belastet als die oberen Kippsegmente 12.

Vorzugsweise werden ausschließlich diejenigen Kippsegmente 12 auf die unter Bezugnahme auf Fig. 2 bis 5 beschriebene Art und Weise ausgestaltet, die relativ gering mit Kräften belastet sind, also ausschließlich mindestens eines der zweiten Kippsegmente.

Bevorzugt werden alle zweiten Kippsegmente, deren Belastung durch Kräfte kleiner als ein Grenzwert ist, wie unter Bezugnahme auf Fig. 2 bis 5 beschrieben, ausgeführt.

Die ersten Kippsegmente, deren Belastung durch Kräfte größer als der Grenzwert ist, werden vorzugsweise derart ausgeführt, dass in deren Gleitlagerfläche 16 keine Nuten eingebracht sind.

### Bezugszeichenliste

- 10: Wellenlagervorrichtung
- 11: Lagergrundkörper
- 11a: Lagerschale
- 11b: Lagerschale
- 12: Kippsegment
- 13: Welle
- 14: Spalt
- 15: Grundkörper
- 16: Gleitlagerfläche
- 17: Segmenteintrittskante
- 18: Segmentaustrittskante
- 19: Seitenrand
- 20: Seitenrand
- 21: Wellendrehrichtung
- 22: Nut
- 23: Nutwand
- 24: Nutwand
- 25: Nutwand
- 26: Nutwand
- 27: Nut

## Patentansprüche

1. Kippsegment (12) für eine Wellenlagervorrichtung, mit einem Grundkörper (15), der eine von einer sich in Axialrichtung erstreckenden Segmenteintrittskante (17), von einer sich ebenfalls in Axialrichtung erstreckenden Segmentaustrittskante (18) und von sich in Umfangsrichtung zwischen der Segmenteintrittskante und der Segmentaustrittskante erstreckenden Seitenrändern (19, 20) begrenzte Gleitlagerfläche (16) aufweist,
wobei
in die Gleitlagerfläche (16) eine näher an der Segmentaustrittskante (18) als an der Segmenteintrittskante (17) liegende, sich in Axialrichtung erstreckende und von vier Nutwänden (23, 24, 25, 26) begrenzte Nut (22) eingebracht ist, **dadurch gekennzeichnet, dass**
in die Gleitlagerfläche (16) weiterhin eine sich in Umfangsrichtung erstreckende Nut (27) eingebracht ist, die sich ausgehend von der Segmenteintrittskante (17) in die sich in Axialrichtung erstreckenden Nut (22) hinein erstreckt.

2. Kippsegment nach Anspruch 1, **dadurch gekennzeichnet, dass** eine Längsmittelachse der sich in Axialrichtung erstreckenden Nut (22) in einem Abschnitt der Gleitlagerfläche (16) positioniert ist, der in Richtung der an der Segmenteintrittskante (17) mit 0% beginnenden und der an der Segmentaustrittskante (18) mit 100% endenden Umfangserstreckung U1 der Gleitlagerfläche (16) zwischen 60% und 90%, bevorzugt zwischen 60% und 80%, besonders bevorzugt zwischen 70% und 80%, der Umfangserstreckung U1 der Gleitlagerfläche (16) liegt.

3. Kippsegment nach Anspruch 2, **dadurch gekennzeichnet, dass** für das Verhältnis VU=U2/U1 zwischen der sich in Umfangsrichtung erstreckenden Nutbreite U2 der sich in Axialrichtung erstreckenden Nut (22) und der sich zwischen der Segmenteintrittskante (17) und der Segmentaustrittskante (18) ersteckenden Umfangserstreckung U1 der Gleitlagerfläche (16) das Verhältnis 0,02≤VU≤0,20, bevorzugt das Verhältnis 0,05≤VU≤0,20, besonders bevorzugt das Verhältnis 0,05≤VU≤0,10, gilt.

4. Kippsegment nach Anspruch 2 oder 3, **dadurch gekennzeichnet, dass** für das Verhältnis VL=L2/L1 zwischen der sich in Axialrichtung erstreckenden Nutlänge L2 der sich in Axialrichtung erstreckenden Nut (22) und der sich zwischen den Seitenrändern (19, 20) ersteckenden Axialerstreckung L1 der Gleitlagerfläche (16) das Verhältnis 0,5≤VL<1,0, bevorzugt das Verhältnis 0,6≤VL<1,0, besonders bevorzugt das Verhältnis 0,7≤VL<1,0, gilt.

5. Kippsegment nach einem der Ansprüche 1 bis 4, **dadurch gekennzeichnet, dass** die sich in Axialrichtung erstreckende Nut (22) von einer sich in Axialrichtung erstreckenden, der Segmentaustrittskante (18) zugewandten ersten Nutwand (23) und einer sich ebenfalls in Axialrichtung erstreckenden, der Segmentaustrittskante (18) abgewandten zweiten Nutwand (24) begrenzt ist, wobei die sich in Axialrichtung erstreckende Nut (22) zwischen der ersten Nutwand (13) und der zweiten Nutwand (24) eine konstante Nuttiefe aufweist.

6. Kippsegment nach einem der Ansprüche 1 bis 4, **dadurch gekennzeichnet, dass** die sich in Axialrichtung erstreckende Nut (22) von einer sich in Axialrichtung erstreckenden, der Segmentaustrittskante (18) zugewandten ersten Nutwand (23) und einer sich ebenfalls in Axialrichtung erstreckenden, der Segmentaustrittskante (18) abgewandten zweiten Nutwand (24) begrenzt ist, wobei sich ausgehend von der zweiten Nutwand (24) in Richtung auf die erste Nutwand (23) eine Nuttiefe der sich in Axialrichtung erstreckenden Nut (22) vergrößert.

7. Wellenlagervorrichtung (10) zur Gleitlagerung einer rotierenden Welle, mit einem Lagergrundkörper (11), in dem mehrere Kippsegmente (12) in Umfangsrichtung hintereinander aufgenommen sind, wobei im Betrieb erste Kippsegmente stärker als zweite Kippsegmente mit Kräften belastet sind, **dadurch gekennzeichnet, dass** mindestens ein zweites Kippsegment (12), dessen Belastung durch Kräfte kleiner als ein Grenzwert ist, nach einem der Ansprüche 1 bis 6 ausgebildet ist.

8. Wellenlagervorrichtung nach Anspruch 7, **dadurch gekennzeichnet, dass** ausschließlich mindestens eines der zweiten Kippsegmente (12), dessen Belastung durch Kräfte kleiner als ein Grenzwert ist, nach einem der Ansprüche 1 bis 6 ausgebildet ist.

9. Wellenlagervorrichtung nach Anspruch 7 oder 8, **dadurch gekennzeichnet, dass** alle zweiten Kippsegmente (12), deren Belastung durch Kräfte und Momente kleiner als ein Grenzwert ist, nach einem der Ansprüche 1 bis 6 ausgebildet sind.

## Claims

1. A tilting segment (12) for a shaft bearing device, having a main body (15) comprising a sliding bearing surface (16) delimited by a segment inlet edge (17) extending in the axial direction, by a segment outlet edge (18) likewise extending in the axial direction and lateral edges (19, 20) extending in the circumferential direction between the segment inlet edge and the segment outlet edge,
wherein into the sliding bearing surface (16) a groove (22) which is located nearer the segment outlet edge (18) than the segment inlet edge (17) which extends in the axial direction and is delimited by four groove walls (23, 24, 25, 26) is introduced, **characterized in that**
into the sliding bearing surface (16), furthermore, a groove (27) extending in the circumferential direction is introduced, which emanating from the segment inlet edge (17) extends into the groove (22) extending in the axial direction.

2. The tilting segment according to claim 1, **characterized in that** a longitudinal centre axis of the groove (22) extending in the axial direction is positioned in a portion of the sliding bearing surface (16) which in the direction of the circumferential extension U1 of the sliding bearing surface (16) starting in the direction of the segment inlet edge (17) with 0 % and ending at the segment outlet edge (18) with 100 % is between 60 % and 90 % preferably between 60 % and 80 %, particularly preferably between 70 % and 80 % of the circumferential extension U1 of the sliding bearing surface (16).

3. The tilting segment according to claim 2, **characterized in that** for the ratio VU = U2/U1 between the groove width U2 extending in the circumferential direction and the groove (22) extending in the axial direction and the circumferential extension U1 of the sliding bearing surface (16) extending between the segment inlet edge (17) and the segment outlet edge (18) the ratio 0.02 ≤ VU ≤ 0.20, preferably the ratio 0.05 ≤ VU ≤ 0.20, particularly preferably the ratio 0.05 ≤ VU ≤ 0.10 applies.

4. The tilting segment according to claim 2 or 3, **characterized in that** for the ratio VL = L2/L1 between the groove length L2 extending in the axial direction of the groove (22) extending in the axial direction and the axial extension L1 of the sliding bearing surface (16) extending between the side margins (19, 20) the ratio 0.5 ≤ VL < 1.0, preferably the ratio 0.6 ≤ VL < 1.0, particularly preferably the ratio 0.7 ≤ VL < 1.0 applies.

5. The tilting segment according to any one of the claims 1 to 4, **characterized in that** the groove (22) extending in the axial direction is delimited by a first groove wall (23) extending in the axial direction and facing the segment outlet edge (18) and a second groove wall (24) likewise extending in the axial direction and facing away from the segment outlet edge (18), wherein the groove (22) extending in the axial direction has a constant groove depth between the first groove wall (13) and the second groove wall (24).

6. The tilting segment according to any one of the claims 1 to 4, **characterized in that** the groove (22) extending in the axial direction is delimited by a first groove wall (23) extending in the axial direction and facing the segment outlet edge (18) and a second groove wall (24) likewise extending in the axial direction and facing away from the segment outlet edge (18), wherein emanating from the second groove wall (24) in the direction of the first groove wall (23) a groove depth of the groove (22) extending in the axial direction increases.

7. A shaft bearing device (10) for the sliding bearing mounting of a rotating shaft, having a bearing main body (11), in which multiple tilting segments (12) arranged in the circumferential direction one behind the other are received, wherein during the operation first tilting segments are more heavily subjected to forces than second tilting segments, **characterized in that** at least one second tilting segment (12) whose loading by forces is lower than a limit value, is formed according to any one of the claims 1 to 6.

8. The shaft bearing device according to claim 7, **characterized in that** exclusively at least one of the second tilting segments (12), whose loading by forces is lower than a limit value, is formed according to any one of the claims 1 to 6.

9. The shaft bearing device according to claim 7 or 8, **characterized in that** all second tilting segments (12), whose loading by forces and moments is lower than a limit value, are formed according to any one of the claims 1 to 6.

## Revendications

1. Segment basculant (12) pour un dispositif de palier d'arbre, comportant un corps de base (15), qui présente une surface de palier lisse (16) délimitée par une arête d'entrée de segment s'étendant dans la direction axiale (17), par une arrête de sortie de segment s'étendant également dans la direction axiale (18) et par des bords latéraux (19, 20) s'étendant entre l'arête d'entrée de segment et l'arête de sortie de segment dans la direction circonférentielle,
dans lequel dans la surface de palier lisse (16) une rainure (22) située plus près de l'arête de sortie de segment (18) que de l'arête d'entrée de segment (17), s'étendant dans la direction axiale et délimitée par quatre parois de rainure (23, 24, 25, 26) est ménagée, caractérisé en ce
la surface de palier lisse (16) une rainure s'étendant dans la direction circonférentielle (27) est en outre ménagée, laquelle s'étend à partir de l'arête d'entrée de segment (17) dans la rainure s'étendant dans la direction axiale (22).

2. Segment basculant selon la revendication 1, **caractérisé en ce que** un axe médian longitudinal de la rainure s'étendant dans la direction axiale (22) est positionné dans une portion de la surface de palier lisse (16), qui est située dans la direction de l'arête d'entrée de segment (17) avec une extension circonférentielle U1 commençant à 0 % et finissant à 100 % dans la direction de l'arête de sortie de segment (18) de la surface de palier lisse (16) entre 60 % et 90 %, de préférence entre 60 % et 80 %, de manière particulièrement préférée entre 70 % et 80 % de l'extension circonférentielle U1 de la surface de palier lisse (16).

3. Segment basculant selon la revendication 2, **caractérisé en ce que** pour le rapport VU = U2/U1 entre la largeur de rainure U2 s'étendant dans la direction circonférentielle de la rainure s'étendant à la direction axiale (22) et l'extension circonférentielle U1 de la surface de palier lisse (16) s'étendant entre l'arête d'entrée de segment (17) et l'arête de sortie de segment (18) le rapport 0,02 ≤ VU ≤ 0,20, de préférence le rapport 0,05 ≤ VU ≤ 0,20, de manière particulièrement préférée le rapport 0,05 ≤ VU ≤ 0,10 est en vigueur.

4. Segment basculant selon la revendication 2 ou 3, **caractérisé en ce que** pour le rapport VL = L2/L1 entre la longueur de rainure L2 s'étendant dans la direction axiale de la rainure (22) et l'extension axiale L1 de la surface de palier lisse (16) s'étendant entre les parois latérales (19, 20) le rapport 0,5 ≤ VL ≤ 1,0, de préférence le rapport 0,6 ≤ VL ≤ 1,0, de manière particulièrement préférée le rapport 0,7 ≤ VL ≤ 1,0 est en vigueur.

5. Segment basculant selon une des revendications 1 à 4, **caractérisé en ce que** la rainure s'étendant dans la direction axiale (22) est délimitée par une première paroi de rainure (23) s'étendant dans la direction axiale, tournée vers l'arête de sortie de segment (18) et une deuxième paroi de rainure (24) s'étendant également dans la direction axiale, se détournant de l'arête de sortie de segment (18), dans lequel la rainure s'étendant dans la direction axiale (22) présente une profondeur de rainure constante entre la première paroi de rainure (23) et la deuxième paroi de rainure (24).

6. Segment basculant selon une des revendications 1 à 4, **caractérisé en ce que** la rainure s'étendant dans la direction axiale (22) est délimitée par une première paroi de rainure (23) s'étendant dans la direction axiale, tournée vers l'arête de sortie de segment (18) et une deuxième paroi de rainure (24) s'étendant également dans la direction axiale, se détournant de l'arête de sortie de segment (18), dans lequel à partir de la deuxième paroi de rainure (24) dans la direction de la première paroi de rainure (23) une profondeur de paroi de la rainure s'étendant dans la direction axiale (22) s'agrandit.

7. Dispositif de palier d'arbre (10) pour le positionnement coulissant d'un arbre rotatif, comportant un corps de base de palier (11), dans lequel plusieurs segments basculants (12) sont renfermés les uns derrière les autres dans la direction circonférentielle, dans lequel en fonctionnement les premiers segments basculants sont chargés plus fortement que les deuxièmes segments basculants avec des forces, **caractérisé en ce que** au moins un deuxième segment basculant (12), dont la charge par des forces et est plus petite qu'une valeur limite, est réalisé selon une des revendications 1 à 6.

8. Dispositif de palier d'arbre selon la revendication 7, **caractérisé en ce que** exclusivement au moins un des deuxièmes segments basculants (12), dont la charge par des forces est plus petite qu'une valeur limite, est réalisé selon une des revendications 1 à 6.

9. Dispositif de palier d'arbre selon la revendication 7 ou 8, **caractérisé en ce que** tous les deuxièmes segments basculants (12), dont la charge par des forces et des couples est plus petite qu'une valeur limite, sont réalisés selon une des revendications 1 à 6.
